# DEMANDE DE BREVET EUROPEEN

(11) **EP 0 792 048 A1**
(43) Date de publication de la demande: **27.08.1997**
(21) Numéro de dépôt: 97400358.4
(22) Date de dépôt: 18.02.1997
(51) Int. Cl.: H04L 12/64

(54) **Pont-routeur multiprotocoles pour réseaux industriels**

(30) Priorité: 20.02.1996 FR 9602055
(71) Demandeur: COMMISSARIAT A L'ENERGIE ATOMIQUE, 75015 Paris (FR)
(72) Inventeur: Alexandre, Jean Marc, 92160 Antony (FR); Cour, Jean Michel, 91400 Orsay (FR)
(74) Mandataire: Dubois-Chabert, Guy

(57) **Abrégé**

La présente invention concerne un pont-routeur multiprotocoles pour réseaux industriels, qui combine des circuits d'interface dédiés aux différents protocoles, des moyens d'attribution et d'identification de numéros de voies spécifiques de chaque protocole, et un microcontrôleur de commande transmettant les informations logiques trame par trame.

Elle concerne également un système de communication multiprotocoles entre médias répartis sur deux postes éloignés l'un de l'autre, comprenant un support unique qui réunit les deux postes et un pont-routeur, à chaque extrémité de ce support, qui combine des circuits d'interface dédiés aux différents protocoles, des moyens d'attribution et d'identification de numéros de voie spécifiques de chaque protocole, et un microcontrôleur de commande.

Application notamment aux interconnexions d'ateliers, à la télésurveillance, au contrôle d'accès et à la télé-opération de robots mobiles d'inspection ou d'intervention.

## Description

### Domaine technique

La présente invention concerne un pont-routeur multiprotocoles pour réseaux industriels. Elle concerne également un système de communication multiprotocoles entre médias répartis sur deux postes éloignés l'un de l'autre.

Le domaine de l'invention est celui des réseaux dits "industriels".

### Etat de la technique antérieure

Différents termes connus de l'homme de l'art, employés dans la description qui va suivre, sont définis dans les documents référencés [1] et [2] en fin de description.

Le champ d'application des réseaux industriels regroupe un large éventail de produits. Certains de ceux-ci sont décrits dans les documents référencés [3], [4] et [5] en fin de description.

Une liste non limitative d'exemples de liaisons et réseaux industriels concernés est donnée ci-dessous :
- la retransmission d'image et de son, sous forme analogique traditionnelle ;
- la retransmission d'image et de son, sous forme digitalisée (avec compression ou non) ;
- l'interconnexion d'automates programmables ou d'ordinateurs de contrôle industriel, tels que les produits dérivés du standard IEEE 802.3 dit "Ethernet" ;
- l'interconnexion mixte d'automates programmables, de capteurs et d'actionneurs, tels que les produits conformes au protocole "CAN", décrit notamment dans le document référencé [3] en fin de description, ou au protocole LonWorks, décrit dans le document référencé [4] ;
- certains types de bus dit d"'entrées / sorties déportées", destinés à simplifier le raccordement de capteurs et actionneurs élémentaires, tels que ASI.

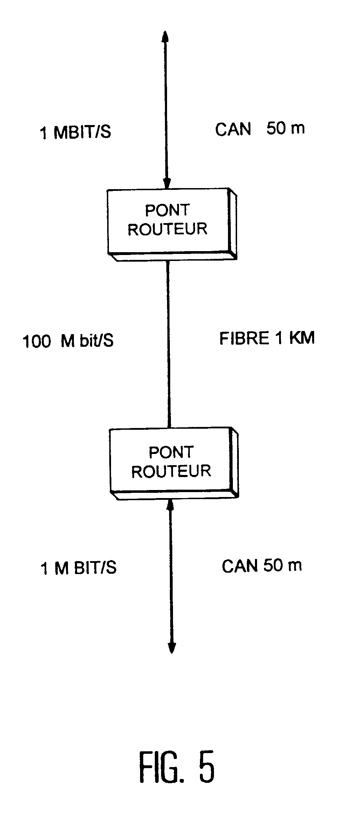

Un document de l'art antérieur, référencé [5] en fin de description, décrit des réseaux locaux industriels dits SINEC. Les schémas des figures 5/5, 5/6 décrivent un réseau monoprotocole réparti sur deux postes éloignés réunis par un câble de liaison (électrique ou optique) unique via deux "répéteurs".

Trois sortes de problèmes se posent dans les systèmes basés sur des liaisons, réseaux ou bus, tels que définis ci-dessus :
- des problèmes d'isolement électrique et d'immunité aux perturbations ;
- des limitations de débit et/ou de portée (distance entre les points les plus éloignés) ;
- des problèmes de multiplexage à faible coût de plusieurs flux de plusieurs natures, i.e. à différentes vitesses, formats et protocoles.

L'invention a pour objet de résoudre ces trois sortes de problèmes en proposant un système de communication multiprotocoles permettant de réunir, sans limitation de débit ou de portée, des médias et/ou protocoles répartis sur deux postes éloignés l'un de l'autre.

### Exposé de l'invention

L'invention concerne un pont-routeur ("router-bridge") multiprotocoles pour réseaux industriels, caractérisé en ce qu'il comprend un routeur combinant des circuits d'interface dédiés aux différents protocoles, des moyens d'attribution et d'identification de numéros de voies spécifiques de chaque protocole, et un dispositif logique de commande transmettant les informations logiques trame par trame : un bus interne au pont-routeur véhiculant des informations d'adresses (numéros de voie) et de données.

Avantageusement ce pont-routeur comprend un multiplexeur de longueur d'onde apte à être connecté à une fibre optique, relié d'une part à un coupleur optique, par exemple du type équilibré dit "50/50", lui-même relié à deux bornes du routeur de transmission de données, et d'autre part à un multiplexeur analogique à modulation de fréquence.

Avantageusement le routeur comprend :
- un circuit récepteur, de type "TAXI", découplé du bus interne par une mémoire FIFO, assurant la conversion série-parallèle du flux reçu via un récepteur optoélectronique ;
- un circuit émetteur, de type "TAXI", assurant la conversion parallèle-série du flux émis via un émetteur optoélectronique.

Dans un exemple il comprend également :
- un microcontrôleur qui assure les fonctions d'initialisation et les fonctions de routage des données par l'intermédiaire de circuits d'interfaces, tous reliés au bus système d'adresse et de données ;
- un circuit de gestion de bus de terrain connecté à un bus bifilaire à diffusion via un circuit amplificateur/détecteur de signaux ;
- un circuit de type UART connecté à une liaison asynchrone duplex via des driver et détecteur.

La présente invention concerne également un système de communication multiprotocoles entre médias et/ou protocoles répartis sur au moins deux postes éloignés l'un de l'autre prenant en compte des bus de terrain, et des réseaux de transmission de données numériques, caractérisé en ce qu'il comprend au moins un support unique qui réunit les deux postes et au moins un pont-routeur, à chaque extrémité de ce support, qui combine des circuits d'interface dédiés aux différents protocoles, des moyens d'attribution et d'identification de numéros de voies spécifiques de chaque protocole, et un dispositif logique de commande transmettant les informations logiques trame par trame ; un bus interne à chaque pont-routeur véhiculant des informations d'adresses et de données.

Dans un exemple de réalisation avantageux, les bus de terrain sont des bus de type CAN. Le support unique est une fibre optique. Les réseaux de transmission de données numériques comportent des liaisons série asynchrone duplex reliant au moins un micro-ordinateur et au moins un périphérique. Ce système peut également prendre en compte des liaisons analogiques ou numériques de transmission d'images entre au moins une caméra et au moins un récepteur d'images vidéo.

Avantageusement dans le cas où le support unique de liaison est une fibre optique, les informations logiques sont véhiculées par une onde optique de fréquence (c'est-à-dire de couleur) donnée, les informations analogiques de transmission vidéo par une onde optique d'une autre fréquence, chaque pont-routeur comprenant un multiplexeur combinant ces informations sur la fibre optique.

Avantageusement le système de l'invention peut comporter une pluralité de types de liaisons ou bus industriels, de type analogique ou numérique, qui sont relayées par des ponts-routeurs combinant des moyens de multiplexage et de couplage optiques, et des moyens électroniques de multiplexage de plusieurs protocoles de transmission de données partageant une liaison ou un nombre limité de liaisons très rapides.

Avantageusement le système de l'invention peut comporter des routeurs réalisant un relayage multiprotocoles transparent, ces routeurs combinant des circuits d'interface dédiés aux différents protocoles avec des circuits de transmission de données rapides agencés pour identifier immédiatement numéro de voie et fin de trame sous contrôle d'un programme enregistré.

l'invention permet, sans surcoût significatif, de relayer plusieurs voies de même type via les ponts-routeurs, par exemple :
- plusieurs voies asynchrones ;
- plusieurs bus CAN ;
de façon à subdiviser le travail en autant de flux mutuellement indépendants.

Une conséquence industrielle globale importante est que, pour le développement des systèmes utilisant des ponts-routeurs multiprotocoles selon l'invention, tout se passe comme si les différentes liaisons et bus relayés étaient chacun direct et d'un seul tenant, en conformité avec ses caractéristiques d'origine. Ainsi, les coûts d'études sont pratiquement les mêmes que si les différents sous-ensembles étaient mutuellement indépendants et substantiellement affranchis des distances et des délais.

L'invention permet également de conserver le bénéfice d'un bus tel que CAN sur des distances et des débits interdits avec les moyens usuels de type câble métallique à diffusion grâce à une retransmission quasi transparente (routage).

Le système de l'invention peut être appliqué notamment aux interconnexions d'ateliers, à la télésurveillance, au contrôle d'accès, à la télé-opération de robots mobiles d'inspection ou d'intervention.

### Brève description des dessins

- La figure 1 représente un système de contrôle d'accès intégrant un exemple de réalisation très simple du système de l'invention ;
- la figure 2 est un bloc diagramme qui représente plus en détail la structure des ponts-routeurs illustrés sur la figure 1 ;
- la figure 3 est un bloc diagramme qui représente plus en détail la structure d'un routeur de transmission de données illustré sur la figure 2 ;
- les figures 4A, 4B et 4C illustrent quelques détails de représentation des données véhiculées via les routeurs illustrés sur la figure 3 ;
- la figure 5 illustre une configuration particulière de ponts-routeurs.

### Exposé détaillé de modes de réalisation

### Description des figures

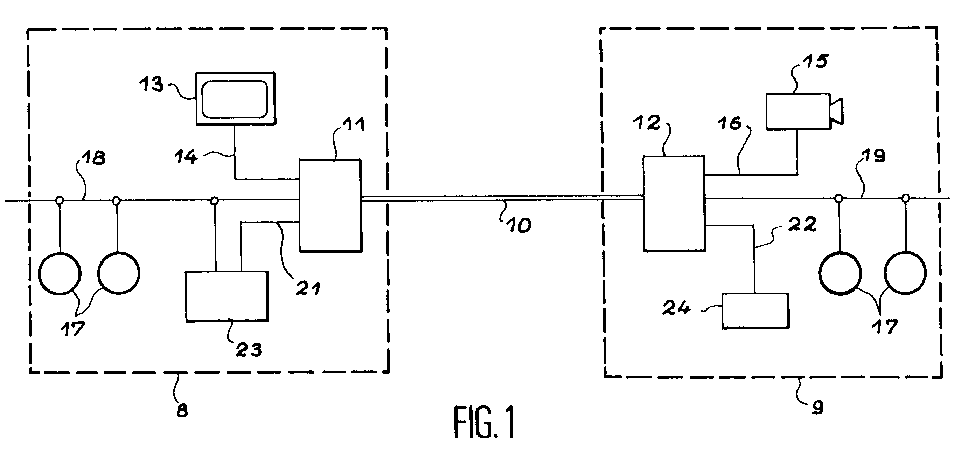

la figure 1 représente un système de contrôle d'accès intégrant un mode de réalisation très simple du système de l'invention.

Un poste de commande 8 et des postes déportés, par exemple le poste 9, communiquent, par exemple, via une fibre optique 10 et deux ponts-routeurs multiprotocoles 11 et 12.

Au poste de commande 8 un ensemble de moniteurs vidéo 13 reçoit, via un groupe de liaisons analogiques 14, des images collectées par des sources 15 et retransmises via les liaisons analogiques 16.

Des dispositifs de commande et d'entrées/sorties industriels 17, aussi bien situés au poste de commande que déportés, communiquent via un bus de terrain ("field bus") par exemple du type standard CAN dont les branches 18 et 19 sont reliées selon l'invention dans un mode quasi-transparent.

Les branches 21 et 22 forment une liaison série asynchrone duplex, par exemple du type standard "RS232/V24", totalement transparente entre un microcontrôleur de commande générale 23 situé au poste de commande, et un périphérique 24 (par exemple une imprimante de service) situé à distance.

Le microcontrôleur 23 est également relié au bus de terrain sur la branche 18 afin d'assurer des fonctions de supervision générale du système.

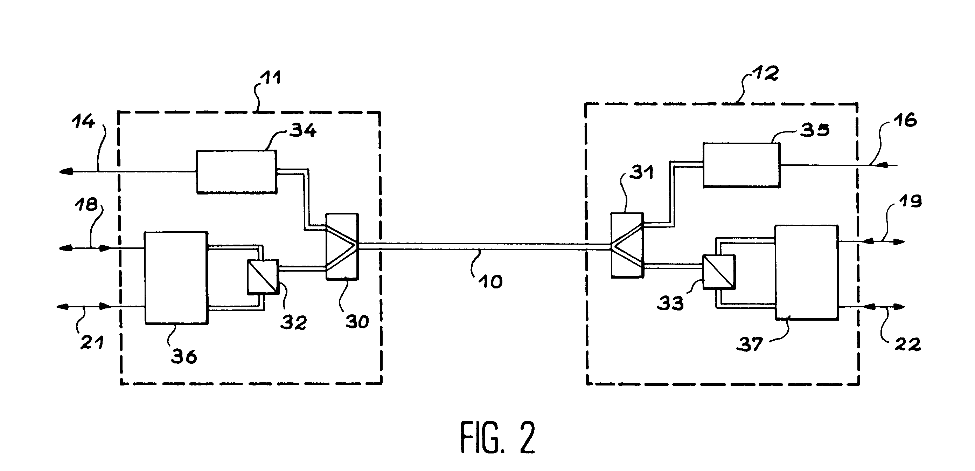

La figure 2 est un bloc diagramme qui représente plus en détail la structure des ponts-routeurs 11 et 12.

La fibre optique 10 est connectée de part et d'autre à des multiplexeurs de longueur d'onde 30 et 31, qui séparent les photons qui circulent sur la fibre 10 en deux flux :
- un premier flux qui relie entre eux des coupleurs optiques 32 et 33, du type dit "50/50" (i.e. à combinaison/séparation égale en puissance), aux fins de transmission de données multiprotocoles ;
- un second flux qui relie entre eux les multiplexeurs analogiques à modulation de fréquence 34 (distributeur de canaux vidéo) et 35 (concentrateur de canaux vidéo).

Les coupleurs optiques 32 et 33 réalisent le partage en duplex intégral du premier flux en deux sens de transmission antisymétriques, et relient entre eux les routeurs de transmission de données 36 et 37.

Tous les éléments optiques décrits ici sont de type connu :
- les multiplexeurs séparent optiquement par diffraction deux longueurs d'onde usuelles en transmission optique, telles que 1300 nm et 820 nm ;
- les coupleurs divisent/combinent les flux lumineux indépendamment de leurs longueurs d'onde, dans des proportions énergétiques prévues, telles que 50 % + 50 %.

De tels multiplexeurs 30 et 31 et coupleurs optiques 32 et 33, ainsi que les fibres et raccordements optiques, peuvent par exemple être approvisionnés auprès de la société Alliance Technique Industrielle.

Les multiplexeurs/démultiplexeurs 34 et 35 de signaux vidéo modulés en fréquence peuvent par exemple être choisis dans la gamme référencée 500 Multi-Channel produite par la société COE Ltd.

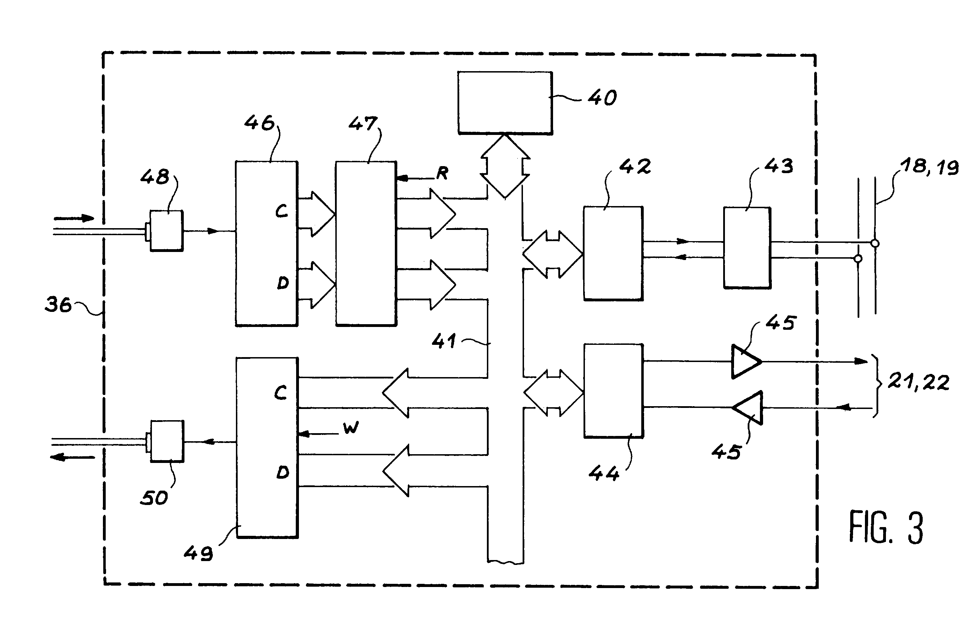

La figure 3 est un bloc diagramme qui représente plus en détail la structure d'un routeur de transmission de données (36, 37).

Un microcontrôleur 40 assure les fonctions d'initialisation et les fonctions de routage des données proprement dites, par l'intermédiaire de circuits d'interface 42, 44, 46 et 47, et 49, tous reliés à un bus interne 41 (adresses et données éventuellement multi-plexées, comme c'est courant pour ce type de processeur) selon une architecture usuelle.

Dans un autre mode de réalisation visant à augmenter la puissance de traitement du routeur, les tâches d'interface peuvent être distribuées à plusieurs unités de contrôle, interconnectées entre elles de manière interne par tout type de bus parallèle ou série suffisamment rapide.

Le détail des circuits de décodage d'adresses et de signaux de lecture/écriture du microcontrôleur, que l'homme de l'art peut établir sans peine, a été volontairement omis sur cette figure.

De même le détail des couplages entre les circuits intégrés et les interfaces physiques de transmission/réception a été omis.

Le circuit intégré 42 est un gérant de protocole de bus de terrain, par exemple au standard "CAN" (Controller Area Network), connecté à un bus bifilaire à diffusion (18, 19) via un circuit 43 amplificateur/détecteur de signaux.

Le circuit intégré 44 est un circuit standard du marché du type "UART" (Universal Asynchronous Transmitter/Receiver), connecté à une liaison série asynchrone duplex 21, 22, par exemple au standard bien connu RS232/V24, via des driver et détecteur 45.

Le circuit récepteur 46 est un circuit standard du marché, par exemple du type TAXI, découplé du bus 41 par une mémoire FIFO ("First-In-First-Out") 47, assurant la conversion série→parallèle du flux reçu via le récepteur optoélectronique 48.

Symétriquement, le circuit émetteur 49 est un circuit standard du marché, par exemple de type "TAXI", assurant la conversion parallèle→série du flux ensuite émis via l'émetteur optoélectronique 50.

Dans un exemple de réalisation :
- le microcontrôleur 40 peut être de tout type connu, par exemple un modèle de la série MCS-96 de la société Intel Corporation ;
- le circuit intégré 42 peut être un circuit de référence PCA82C200 accompagné d'un circuit d'interface 43 de référence PCA82C250, tous deux fournis par la société Philips Semiconductors ;
- le circuit intégré 44 peut être n'importe quel circuit UART tel que le modèle 16550 qui équipe les liaisons série asynchrones COMx des ordinateurs de type PC ("Personal Computer") , ainsi que les driver, détecteurs 45 des types connus 1488 et 1489 ;
- les circuits intégrés TAXI 49 et 46 sont par exemple les modèles Am7968 et Am7969, fabriqués par la société American Micro Devices ;
- la mémoire FIFO 47 peut être assemblée à partir de circuits de la série 7200 du même fabricant American Micro Devices ;
- les circuits 50 et 48 d'émission et de réception sur fibre optique peuvent être par exemple de la série HFBR-0400 travaillant à la longueur d'onde de 820 nm, proposés par la société Hewlett-Packard Components.

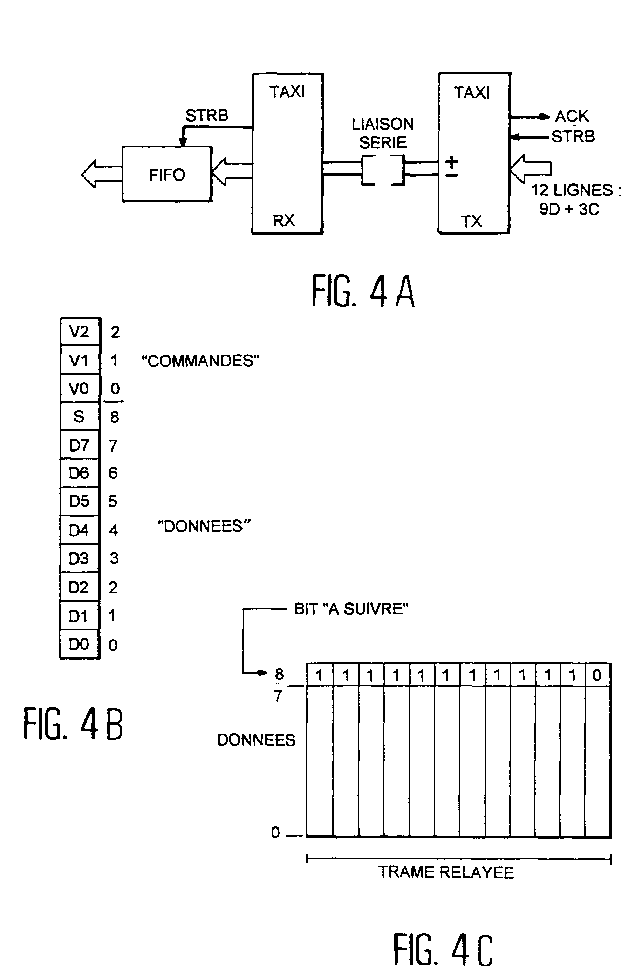

Les figures 4A, 4B et 4C illustrent quelques détails de représentation des données véhiculées via les routeurs 36 et 37.

La figure 4A rappelle l'un des modes de fonctionnement des circuits de type TAXI, à savoir la recopie à distance (conversions et codages parallèle/série/parallèle) de mots de douze bits, séparés en :
- neuf bits de "données" ;
- trois bits de "commande" ;
l'envoi des données ou des commandes est déclenché par le signal STRB.

L'interface d'envoi des données est asynchrone, c'est-à-dire qu'il suffit de charger un registre d'entrée en parallèle (par le signal STRB) à la fois pour recopier les données et commander leur envoi. L'opération peut être répétée dès que la transmission est réalisée ; un signal de synchronisation (ACK) est disponible à cet effet.

La figure 4B donne le détail d'affectation des bits émis et reçus en parallèle via les circuits TAXI :
- trois bits pour indiquer la voie relayée (soit sept codes, car la combinaison 000 provoque l'envoi des neuf autres bits de "données") ;
- neuf bits de "données".

La figure 4C donne le principe de retransmission d'une trame, c'est-à-dire un train d'information correspondant à l'un des protocoles routés. Les octets courants sont accompagnés d'un neuvième bit dit "à suivre" (valeur 1) qui permet de délimiter la trame relayée, dont le passage à 0 avec le dernier octet de la trame est une indication d'avoir à retransmettre la trame sur la voie distante.

Cette figure donne le détail d'affectation des douze lignes "données" et "commandes" des circuits TAXI, avec V : numéro de voie relayée ; S : "à suivre" ; D : octet courant.

### Fonctionnement

Les figures 1 et 2 illustrent une première caractéristique de l'invention, à savoir la séparation des flux logiques et analogiques grâce à un premier niveau de moyens (multiplexeurs 30 et 31; coupleurs optiques 32 et 33).

L'emploi d'une liaison optique unique 10, outre l'isolation galvanique et une immunité au bruit électromagnétique quasi parfaites, allège le coût et l'encombrement du câblage.

Toutefois on peut, sans sortir du domaine de l'invention, utiliser un câble multifibres, voire un câble coaxial avec isolements.

Dans l'exemple de réalisation décrit, on sépare par longueurs d'ondes les signaux vidéo modulés selon une méthode analogique à modulation de fréquence, véhiculés par un flux de lumière de longueur d'onde 1300 nm, des signaux de transmission de données de type bus CAN et liaison série asynchrone, ces derniers étant véhiculés en duplex intégral par des flux lumineux à la longueur d'onde de 820 nm.

La retransmission des signaux vidéo s'effectue ainsi en parallèle des flux de données, de manière essentiellement transparente pour les équipements standards 34 et 35, et ne sera pas autrement décrite.

Les coupleurs optiques 32 et 33 assurent le mélange purement énergétique des deux flux lumineux en sens opposés, émis par les routeurs 36 et 37. En effet, contrairement aux signaux électriques, les flux de lumière transmis en sens inverse via des dispositifs aux réflexions négligeables ne se perturbent pas, bien qu'ils soient de même longueur d'onde.

Un tel montage provoque la perte d'environ la moitié de l'énergie reçue dans le coupleur depuis la fibre commune 10, ce qui reste acceptable tant que l'on reste dans les limites d'un bilan énergétique global (pertes d'insertion, atténuations) compatible avec les émetteurs et récepteurs sélectionnés.

Dans l'exemple de réalisation considéré, les routeurs 36 et 37, pour la clarté de l'exposé, ne retransmettent que deux voies de données :
- sur la première voie (18, 19) : un seul bus de terrain industriel du type CAN ;
- sur la deuxième voie (21, 22) : une seule liaison duplex intégrale du type série asynchrone. Mais le nombre de voies et de types de voies peut être plus important : il n'est limité que par le mécanisme d'identification (jusqu'à sept voies dans l'exemple considéré), et par la rapidité de la liaison commune (qui dans le même exemple est environ cent fois plus grande que celle des voies relayées).

### Relayage de bus de terrain industriels tels que le standard "CAN"

Les stations connectées à un bus de terrain de type CAN transmettent en mode diffusé de courtes trames d'information, de 0 à 8 octets, sans adressage à proprement parler. L'en-tête des trames identifie seulement la donnée transportée (et non l'adresse des destinataires).

Les autres stations en fonction de l'application peuvent capter toutes les trames, ou faire sélectionner un nombre limité d'identificateurs par les circuits intégrés spécialisés.

L'arbitrage des conflits d'accès au bus, la détection d'erreurs etc.. sont effectués par les circuits intégrés ad hoc, mais sont dépendants de limites de temps très étroites, qui elles-mêmes dépendent du temps de propagation des signaux.

Habituellement, les utilisateurs de tels bus sont donc conduits à effectuer des compromis entre vitesse de transmission et distance. Alors que le débit d'un bus CAN de quelques mètres peut être fixé à 1 Mbit/s ; il tombe à 125 Kbit/s pour une distance de l'ordre de 500 m et perd tout intérêt pratique au-delà du kilomètre.

L'un des avantages du système de l'invention est de conserver le bénéfice d'un tel bus sur des distances et des débits interdits avec les moyens usuels de type câble métallique à diffusion, grâce à une retransmission quasi transparente (routage).

Dans l'exemple de réalisation décrit, la retransmission (relayage) du trafic sur le bus CAN s'effectue naturellement trame par trame.

### Relayage d'une liaison série asynchrone duplex intégral

Les limitations physiques de débit et de distance des liaisons série de type classique, telles que RS232/V24, sont bien connues.

Il existe des solutions connues de retransmission à grande distance par modems ou convertisseurs de toutes sortes, mais ces solutions sont étroitement spécialisées. Elle ne permettent pas d'autres combinaisons, avec plusieurs voies de communication industrielle, que la pure juxtaposition de médias et de convertisseurs hétérogènes.

Dans l'exemple de réalisation décrit, la retransmission (relayage) de la voie (21, 22) s'effectue naturellement trame par trame, c'est-à-dire caractère par caractère.

### Procédé de relayage proprement dit

Ce procédé intervient après exécution des séquences normales d'initialisation des différents circuits d'interface.

Dans l'exemple de réalisation considéré on attribue arbitrairement la voie codée en binaire 001 au relayage du bus CAN (18, 19), et la voie codée en binaire 010 au relayage de la liaison série asynchrone (21, 22).

Pour retransmettre une trame CAN complètement reçue et mémorisée dans le circuit 42, le programme du microcontrôleur 40 consiste en deux étapes :
- copier le numéro de voie 001 vers le circuit 46 distant, en écrivant ce code en tant que "commande" sur le circuit émetteur local 49 ;
- recopier tous les octets de données de la trame CAN avec le bit S=1, sauf le dernier avec le bit S=0, en tant que données sur le circuit émetteur 49 local.

Pour retransmettre un octet reçu via le circuit UART 44, le programme du microcontrôleur consiste en deux étapes :
- copier le numéro de voie 010 vers le circuit 46 distant, en écrivant ce code en tant que commande sur le circuit émetteur local 49 ;
- copier l'octet de données avec le bit S=1.

Le programme de réception du microcontrôleur 40 est extrêmement simple. Les octets reçus, accompagnés de leur bit S et du numéro de voie, sont mémorisés dans l'ordre d'arrivée dans la mémoire FIFO 47.

Pour chaque octet reçu, le programme du microcontrôleur 40 consiste en trois étapes :
- lire les trois bits du code de voie ;
- recopier l'octet de données vers l'interface CAN 42 si le code de voie est 001, vers l'interface UART 44 si le code de voie est 010 ;
- déclencher l'envoi des données si le bit S=1.

Ces différentes opérations s'effectuent sans instructions auxiliaires de synchronisation, dans la mesure où la vitesse sur la fibre optique 10 est très supérieure à la vitesse des différentes voies relayées, et grâce à l'insertion d'une mémoire FIFO 47 en réception.

Le programme d'émission n'effectue que peu ou pas de traitement des trames relayées, puisque dans le plus simple cas il lui suffit d'en déterminer la longueur ou la fin.

De son côté, le programme de réception n'effectue aucun traitement du contenu des trames.

On peut remarquer également :
- d'une part, qu'une haute vitesse de transmission sur la fibre optique 10 minimise le retard dû au relayage ;
- d'autre part, que le taux d'erreurs non détectées est considéré comme négligeable sur ce type de support.

Un grand nombre de types de liaisons et de protocoles différents peuvent être relayés suivant cette même méthode générique. On peut ainsi relayer plusieurs bus de même type à travers un seul pont-routeur.

En outre, comme cela est connu pour les ponts-routeurs monoprotocoles, il est aisé de doter les programmes de "filtres", pour ne relayer sélectivement que les trames qui intéressent l'autre extrémité de la liaison commune 10, et ainsi optimiser encore l'usage de cette liaison.

Il est possible sans surcoût significatif de relayer plusieurs voies de même type, via les ponts-routeurs, par exemple :
- plusieurs voies asynchrones ;
- plusieurs bus CAN ;
de façon à subdiviser le travail en autant de flux mutuellement indépendants.

Pour le développement des systèmes utilisant des ponts-routeurs multiprotocoles selon l'invention, tout se passe comme si les différentes liaisons et bus relayés étaient chacun direct et d'un seul tenant, en conformité avec leurs caractéristiques d'origine.

Autrement dit les coûts d'étude sont pratiquement les mêmes que si les différents sous-ensembles étaient mutuellement indépendants, et affranchis des distances et des délais.

Trois exemples de réalisation vont être donnés à présent pour mieux faire comprendre les avantages de l'invention par rapport aux techniques traditionnelles.

### Exemple 1 : Système de contrôle d' accès

Un système de contrôle d'accès connecte habituellement des éléments déportés tels que :
- caméra vidéo ;
- interphone ;
- lecteur d'identification (par exemple d'une carte à mémoire) ;
- commandes d'éclairage, d'ouverture/fermeture de portes, etc..
avec un poste central de commande comportant :
- moniteur vidéo ;
- interphone ;
- pupitre de télécommande ;
- ordinateur pour collecte d'événements, bases de données d'autorisation, etc..

La connexion des éléments déportés au poste de commande comporte habituellement plusieurs câbles différents, par exemple :
- un câble coaxial pour la vidéo ;
- une paire de câbles, blindée pour le son ;
- une ou plusieurs liaisons filaires pour transmission de données (souvent autant que de sous-ensembles connectés).

Les grandes distances se traduisent souvent par une perte de performances en termes de débit de données.

L'impact recherché est double :
- réduction des coûts de câblage en utilisant un support unique tel qu'une seule fibre optique ;
- utilisation, pour les composants d'automatisme, des nouveaux standards du marché à faible coût (par exemple les bus CAN ou ASI déjà cités) au-delà de leur portée normale.

Pour ce faire, deux boîtiers "ponts-routeurs" conformes à l'invention sont insérés aux deux extrémités de la fibre.

Sur ces boîtiers on trouve des connexions identiques à celles qui auraient existé avec deux, trois.... liaisons séparées, et des inter-fonctionnements transparents ; tout se passe comme s'il existait autant de liaisons directes, et comme si la distance entre les éléments déportés et le poste de commande était abolie.

Une conséquence indirecte mais non négligeable au plan des budgets d'étude d'un tel système est que l'on peut développer chaque liaison et chaque réseau comme si les ponts-routeurs et la liaison en fibre optique n'existaient pas.

### Exemple 2 : Robot d'inspection

Un robot d'inspection de canalisations, de conduits, d'objets suspects etc... est constitué d'une plate-forme, motorisée mobile, reliée à un poste de commande fixe, éloigné du lieu d'intervention par un câble dit "ombilical".

La charge utile du robot dépend de sa mission, qui peut aller d'une simple prise de vues à des mesures complexes assorties de télémanipulations.

Ce câble ombilical peut comporter un apport d'énergie ou non, selon que le robot est conçu avec une source embarquée ou non.

En outre, le câble ombilical doit véhiculer :
- vidéo, son, informations sur la localisation et l'attitude du robot, diverses télémesures (physiques ou chimiques) vers le poste de commande ;
- les télécommandes de déplacement de la plate-forme mobile, de déplacement d'un bras manipulateur ; les mesures du capteur.

L'utilisation de tels robots se heurte aujourd'hui à l'une ou l'autre des limitations suivantes :
- limitation de la charge utile par la capacité de transport d'informations et de commandes d'un câble ombilical simple, doté par exemple d'un câble coaxial unique pour la vidéo et d'une transmission de données à faible débit ;
- limitation du rayon d'action, lié au volume, au poids, et à la rigidité d'un câble ombilical composé, par assemblage, d'un grand nombre de câbles différents ;
- limitation de rayon d'action lié aux pertes de performances des liaisons et protocoles de transmission usuels sur des câbles ombilicaux à grande distance.

L'utilisation de ponts-routeurs selon l'invention, tels que déjà évoqués dans l'exemple précédent, permet à travers un câble ombilical léger et de grande longueur, tel qu'une fibre optique unique, de multiplier les charges utiles sans le handicap du rayon d'action, et de minimiser le coût du robot par l'utilisation de liaisons ou de bus industriels de grande diffusion.

### Exemple 3 : déport d'interfaces "CAN"

Le système de l'invention présente un intérêt particulier pour le déport d'interfaces du type CAN.

Le bus de terrain CAN a été adopté par une majorité de constructeurs automobiles comme moyen d'interconnecter des blocs fonctionnels "intelligents" et réduire de manière significative le nombre de fils circulant dans un véhicule.

L'initiateur "historique" de CAN est la société Bosch. Les plus grands fabricants de circuits intégrés (dont Philips, Intel, Motorola, NEC...) produisent les circuits d'interface à très faible coût vu les quantités consommées par la construction automobile.

Le prix a motivé également quelques grands de l'automatisme industriel, qui ont bâti à partir de tels bus CAN des architectures de contrôle/commande et d'entrée/sorties réparties (DeviceNet chez Rockwell Allen Bradley, SDS chez Honeywell...).

Un des mécanismes fondamentaux du bus CAN est l'arbitrage de conflit d'accès au bus, bit à bit, dans le champ d'identification en début de trame, de telle sorte que des stations qui commencent d'émettre à peu près en même temps peuvent se départager sans perte de temps. Or un tel arbitrage nécessite une synchronisation extrêmement fine ; par exemple un asservissement numérique d'horloge basé sur un découpage du bit dans lequel est prévue une "fenêtre" de compensation du temps de propagation des signaux sur le bus. On doit, ainsi, augmenter le temps du bit, et donc réduire la vitesse, en raison inverse de la longueur du bus.

Pour situer les idées, voici des compromis vitesse/distance réalistes recommandés par la société Allen Bradley :

| Longueur (m) | Vitesse (kbit/s) |
|---|---|
| 100 | 500 |
| 200 | 250 |
| 500 | 125 |

Des distances câblées de l'ordre du kilomètre vident donc le bus CAN de tout intérêt industriel si on réalise un bus métallique classique. Alors que sur 50 m on peut aller jusqu'à 1 Mbit/s.

Avec le pont-routeur de l'invention, on effectue un relayage par trame entière, avec un temps de traversée très faible du tronçon en fibre optique. On peut, par exemple, imaginer la configuration illustrée sur la figure 5.

Les stations connectées sur chaque tronçon extrême communiquent entre elles avec un débit de 1 Mbit/s.

Un mécanisme de filtrage simple (d'ailleurs prévu dans les circuits CAN) évite de relayer les trames qui n'intéressent qu'un seul des deux tronçons.

Les trames relayées souffrent d'un retard de transmission faible vu le débit sur la fibre. Le délai global d'arrivée sur une station éloignée reste au total inférieur à trois fois le délai de transmission local. La perte de performance reste donc bien inférieure à une éventuelle connexion "directe" qui ferait chuter le débit dans un rapport supérieur à quatre pour l'ensemble des stations.

De telles performances s'obtiennent avec de simples circuits intégrés CAN standard aux extrémités de la fibre, de manière "transparente" aux applications, la "perte" de performance étant limitée aux trames effectivement relayées.

### REFERENCES

[1] "Internet Working with TCP/IP" de Douglas E. Corner (volume 1, Principles Protocols and Architecture, seconde édition, glossaire, pages 478 à 511)
[2] "Réseaux haut débit" de Marc Boisseau, Michel Demange et Jean-Marie Munier (Eyrolles, 1992, 1995)
[3] "Bus CAN Specification" (Philips Semiconductors, Integrated Circuits, Septembre 1991, pages 42-43, 65-68)
[4] "Réseau d'Automatisme à intelligence répartie" (documentation Echelon sur le réseau LONWORKS, 1995)
[5] "SINEC, réseaux locaux industriels" (catalogue 1K10, 1994, Siemens)

## Revendications

1. Pont-routeur multiprotocoles pour réseaux industriels, caractérisé en ce qu'il comprend un routeur (36, 37), ce routeur (36, 37) combinant des circuits d'interface (43, 44) dédiés aux différents protocoles, avec des moyens d'attribution et d'identification de numéros de voies spécifiques de chaque protocole, et un dispositif logique de commande (40) transmettant les informations logiques trame par trame, un bus interne (41) au pont-routeur véhiculant des informations d'adresses et de données.

2. Pont-routeur selon la revendication 1, caractérisé en ce qu'il comprend un multiplexeur de longueur d'onde (30, 31), apte à être connecté à une fibre optique, relié d'une part à un coupleur optique (32, 33) lui-même relié à deux bornes du routeur de transmission de données (36, 37), et d'autre part à un multiplexeur analogique à modulation de fréquence (34, 35).

3. Pont-routeur selon la revendication 2, caractérisé en ce que le coupleur optique (32, 33) est du type équilibré dit "50/50".

4. Pont-routeur selon l'une quelconque des revendications 1 à 3, caractérisé en ce que le routeur (36, 37) comprend :
- un circuit récepteur (46) du type "TAXI", découplé du bus interne (41) par une mémoire FIFO (47), assurant la conversion série-parallèle du flux reçu via un récepteur optoélectronique (48) ;
- un circuit émetteur (49) du type "TAXI" assurant la conversion parallèle-série du flux émis ensuite via un émetteur optoélectronique (50).

5. Pont-routeur selon l'une quelconque des revendications 1 à 4, caractérisé en ce que le routeur (36, 37) comprend un microcontrôleur (40) qui assure les fonctions d'initialisation et les fonctions de routage des données, par l'intermédiaire de circuits d'interfaces (42, 44, 46 et 47, 49), tous reliés au bus interne d'adresses et de données (41).

6. Pont-routeur selon l'une quelconque des revendications 1 à 5, caractérisé en ce qu'il comprend :
- un circuit de gestion de bus de terrain (42) connecté à un bus bifilaire à diffusion (18, 19) via un circuit amplificateur/détecteur de signaux (43) ;
- un circuit de type UART (44) connecté à une liaison série asynchrone duplex (21, 22) via des driver et détecteur (45).

7. Système de communication multiprotocoles entre médias répartis sur au moins deux postes (8, 9) éloignés l'un de l'autre prenant en compte au moins un bus de terrain, et au moins un réseau de transmission de données numériques, caractérisé en ce qu'il comprend au moins un support unique (10), qui réunit deux postes (8, 9) et au moins un pont-routeur (11, 12) à chaque extrémité de ce support qui combine des circuits d'interface (43, 44) dédiés aux différents protocoles, des moyens d'attribution et d'identification de numéros de voies spécifiques de chaque protocole, et un dispositif logique de commande (40) transmettant les informations logiques trame par trame ; un bus interne (41) à chaque pont-routeur (11, 12) véhiculant des informations d'adresses et de données.

8. Système selon la revendication 7, caractérisé en ce que chaque bus de terrain est un bus de type CAN.

9. Système selon la revendication 7, caractérisé en ce que chaque réseau de transmission de données numériques comporte des liaisons série asynchrone duplex reliant au moins un micro-ordinateur et au moins un périphérique.

10. Système selon la revendication 7, caractérisé en ce qu'il prend également en compte au moins une liaison analogique ou numérique de transmissions d'images entre au moins une caméra et au moins un récepteur d'images vidéo.

11. Système selon la revendication 7, caractérisé en ce que le support unique est une fibre optique.

12. Système selon la revendication 11, caractérisé en ce que les informations logiques sont véhiculées par une onde optique de fréquence donnée, les informations analogiques de transmission vidéo par une onde optique d'une autre fréquence, chaque pont-routeur (11, 12) comportant un multiplexeur (30, 31) qui combine ces informations sur la fibre optique.

13. Système selon la revendication 7, caractérisé en ce qu'il comporte une pluralité de types de liaisons ou bus industriels, de type analogique ou numérique, qui sont relayées par des ponts-routeurs combinant des moyens de multiplexage et de couplage optiques (30, 31 ; 32, 33), et des moyens électroniques de multiplexage de plusieurs protocoles de transmission de données (36, 37) partageant une liaison ou un nombre limité de liaisons très rapides (10).

14. Système selon la revendication 7, caractérisé en ce qu'il comprend des routeurs (36, 37) réalisant un relayage multiprotocoles transparent, ces routeurs (36, 37) combinant des circuits d'interface dédiés aux différents protocoles (43, 44) avec des circuits de transmission de données rapides (46, 49) agencés pour identifier immédiatement numéro de voie et fin de trame sous contrôle d'un programme enregistré (40).

15. Système selon l'une quelconque des revendications 7 à 14, caractérisé en ce qu'il est utilisé pour réaliser une interconnexion d'ateliers.

16. Système selon l'une quelconque des revendications 7 à 14, caractérisé en ce qu'il est utilisé pour réaliser une télésurveillance.

17. Système selon l'une quelconque des revendications 7 à 14, caractérisé en ce qu'il est utilisé pour réaliser un contrôle d'accès.

18. Système selon l'une quelconque des revendications 7 à 14, caractérisé en ce qu'il est utilisé pour réaliser une télé-opération de robot mobile d'inspection ou d'intervention.
